# DEMANDE DE BREVET EUROPEEN

(11) **EP 1 270 803 A1**
(43) Date de publication de la demande: **02.01.2003**
(21) Numéro de dépôt: 01810595.7
(22) Date de dépôt: 19.06.2001
(51) Int. Cl.: D07B 9/00, F16G 11/00

(54) **Procédé de formation d'un embout à l'extrémité d'un câble et pièce en résultant**

(71) Demandeur: A M P H O La Chaux-de-Fonds S.A., 2301 La Chaux-de-Fonds (CH)
(72) Inventeur: Schmid, Bernard, 2301 La Chaux-de-Fonds (CH)
(74) Mandataire: Gresset, Jean

(57) **Abrégé**

L'invention concerne un procédé de formation d'un embout à l'extrémité d'un câble métallique (10), caractérisé en ce qu'il comporte l'opération de création, à ladite extrémité, d'une portion (20) qui se compose exclusivement de matière fondue provenant d'elle même. L'opération est réalisée à l'aide d'une torche micro-plasma ou TIG (16) placée au-dessus de l'extrémité du câble, laquelle est maintenue verticalement et dépasse d'un manchon (14) dont la paroi interne est dotée, à sa partie supérieure, d'une encoche (18) servant à recueillir le métal en fusion. La portion de matière fondue est ensuite remodelée par forgeage pour former un embout de toute forme désirée.

L'invention concerne également la pièce obtenue par ce procédé.

## Description

La présente invention concerne un procédé de formation d'un embout à l'extrémité d'un câble métallique, ainsi que la pièce obtenue par ce procédé.

Les câbles métalliques, généralement réalisés en acier spécial inoxydable, sont utilisés dans de très nombreux domaines, allant de la bijouterie à la construction, en passant par la traction et la suspension. Dans tous les cas, il y a lieu de doter l'extrémité du câble d'un embout permettant de le relier soit à un autre câble soit à toute autre pièce que nécessite son application. Cet embout peut être constitué, notamment, d'un élément fileté, d'un élément taraudé, d'un anneau , d'un crochet ou d'une tête de forme quelconque.

Il va de soi que la principale qualité exigée d'une telle liaison est sa solidité.

Le brevet EP 672 844 propose que l'embout soit fixé à l'extrémité du câble par une opération de soudage en atmosphère gazeuse au moyen d'un arc électrique, notamment selon le procédé de soudage à l'arc TIG.

La technique est, certes, intéressante mais le risque de rupture de la soudure câble-embout ne peut être complètement éliminé, surtout si elle doit être soumise à de très importantes forces de traction.

La présente invention a pour but de fournir un procédé de formation d'un embout à l'extrémité d'un câble, garantissant la meilleure résistance possible de la jonction câble-embout.

Pour atteindre ce but, le procédé selon l'invention se caractérise en ce qu'il comporte l'opération de création, à l'extrémité du câble, d'une portion qui se compose exclusivement de matière fondue provenant d'elle même.

Le procédé selon l'invention présente encore les caractéristiques suivantes.
- Pendant l'opération de fusion, l'extrémité du câble est disposée verticalement.
- La fusion est réalisée à l'aide d'une torche micro-plasma ou TIG placée au-dessus de l'extrémité du câble, sensiblement dans son axe.
- Pour effectuer la fusion, l'extrémité du câble est placée à l'intérieur d'un manchon dont la paroi interne est dotée, à sa partie supérieure, d'une encoche servant à recueillir le métal en fusion.
- La portion de matière fondue est ensuite éventuellement remodelée par forgeage pour former un embout de toute forme désirée.
- L'embout peut être soit constitué d'une tête, soit avoir sensiblement le même diamètre que le câble et être ensuite percé d'un trou taraudé ou doté d'une partie filetée.

L'invention concerne aussi la pièce résultant du procédé défini ci-dessus, qui est remarquable en ce qu'entre la portion totalement fondue et la portion de câble n'ayant subi aucune fusion, elle comporte une portion de transition dans laquelle la proportion de métal fondu décroît progressivement, l'effet étant plus marqué à la périphérie qu'au coeur du câble.

D'autres caractéristiques et avantages de l'invention ressortiront de la description qui va suivre, faite en regard du dessin annexé, dans lequel:
- la figure 1 montre un câble métallique à l'extrémité duquel doit être formé un embout;
- les figures 2 et 3 illustrent les phases essentielles du procédé selon l'invention;
- la figure 4 est une vue du câble à l'issue de l'opération de fusion de son extrémité; enfin,
- les figures 5, 6 et 7 illustrent les opérations que peut ensuite subir l'extrémité fondue du câble.

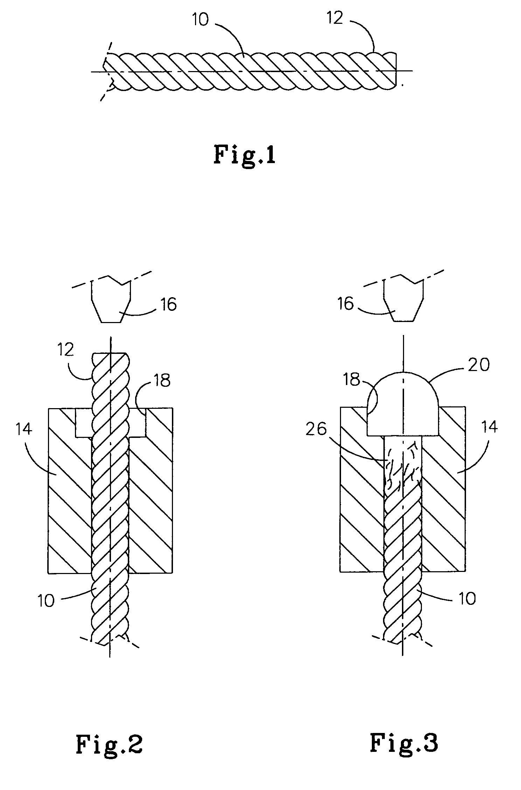

Sur la figure 1, on a représenté en 10 un câble métallique à l'extrémité 12 duquel doit être formé un embout destiné à le relier avec un autre élément.

La première étape du procédé selon l'invention, illustrée par la figure 2, consiste à emprisonner le bout du câble 10 à l'intérieur d'un manchon 14 en veillant à laisser dépasser son extrémité 12 sur une longueur d'environ 2 à 3 fois son diamètre.

Le 14 manchon est alors disposé verticalement sous une torche micro-plasma ou TIG 16 de tout type bien connu de l'homme de métier. Il est réalisé en un matériau conducteur de la chaleur, capable de résister aux températures élevées auxquelles la torche 16 est susceptible d'élever l'extrémité du câble. De façon avantageuse, le matériau utilisé est du cuivre ou de la céramique.

On remarquera que la paroi interne du manchon 14 est dotée, à son extrémité supérieure, d'une encoche18 dont le rôle apparaîtra plus loin. Typiquement, pour un câble ayant un diamètre de 3 mm, l'encoche 18 a un diamètre de 3.4 à 3.8 mm.

L'opération suivante est, comme le montre la figure 3, l'enclenchement de la torche 16 pendant un temps suffisant (généralement de quelques secondes) pour provoquer la fusion de l'extrémité supérieure 12 du câble. Le métal fondu se rassemble alors en un dôme 20 dont la base est limitée par l'encoche 18 du manchon 14.

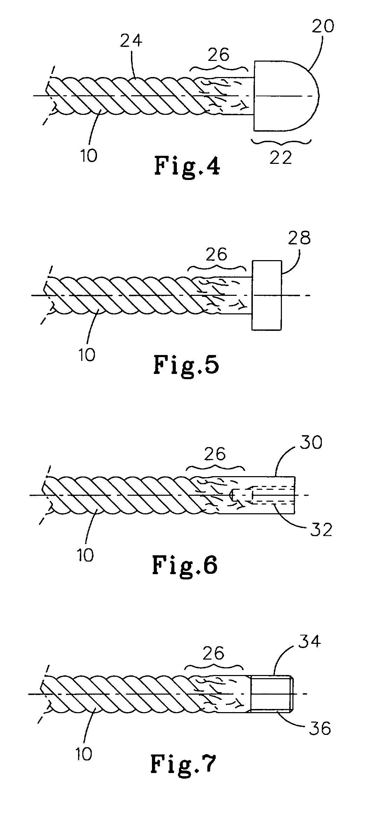

La figure 4, qui est une vue du câble à l'issue de cette opération, fait apparaître qu'entre la portion totalement fondue 22, à laquelle appartient le dôme 20, et la portion 24 n'ayant subi aucune fusion, il s'est formé une portion de transition 26 dans laquelle la proportion de métal fondu décroît progressivement, la fusion étant plus profonde au coeur qu'à la périphérie.

Il n'existe ainsi pas de frontière nette entre la portion fondue et la portion non fondue, ce qui, à l'évidence, garantit la résistance de la pièce à la traction.

Les essais ont montré que la longueur du câble totalement fondue 22 est au moins égale à 2 fois le diamètre du câble, alors que la longueur de la portion de transition 26 est de l'ordre de ce diamètre.

La suite des opérations dépend de l'application visée.

Bien entendu, le dôme 20 peut rester tel quel car il forme un embout présentant déjà des qualités esthétiques et mécaniques largement exploitables.

Les figures 5, 6 et 7 montrent cependant que le dôme peut aussi être remodelé, avantageusement par forgeage, pour:
- selon la figure 5, former un embout 28 constitué d'une tête;
- selon la figure 6, former un embout 30 de même diamètre que le câble, ensuite percé d'un trou taraudé 32;
- selon la figure 7, former un embout 34 de même diamètre que le câble, ensuite doté d'une partie filetée 36.

Ainsi est proposé un procédé permettant de doter l'extrémité d'un câble métallique d'un embout qui, à la grande différence des réalisations de l'art antérieur, n'est pas soudé mais fait partie intégrante du câble, puisque résultant de sa fusion. Les risques de rupture à la jonction câble-embout sont ainsi totalement supprimés. De plus, le procédé évite de devoir gérer séparément un stock de pièces différentes destinées à former les embouts, ce qui constitue un avantage important d'un point de vue strictement économique.

## Revendications

1. Procédé de formation d'un embout à l'extrémité (12) d'un câble métallique (10), **caractérisé en ce qu'**il comporte l'opération de création, à ladite extrémité, d'une portion (22) qui se compose exclusivement de matière fondue provenant d'elle même.

2. Procédé selon la revendication 1, **caractérisé en ce que**, pendant ladite opération, l'extrémité du câble est disposée verticalement.

3. Procédé selon l'une des revendications 1 et 2, **caractérisé en ce que** ladite opération est réalisée à l'aide d'une torche micro-plasma ou TIG(16) placée au-dessus de l'extrémité du câble, sensiblement dans son axe.

4. Procédé selon l'une des revendications 2 et 3, **caractérisé en ce que**, pour effectuer ladite opération, le bout du câble est placé à l'intérieur d'un manchon (14) en laissant dépasser son extrémité (12), la paroi interne dudit manchon étant dotée, à sa partie supérieure, d'une encoche (18) servant à recueillir le métal en fusion.

5. Procédé selon l'une des revendications 1 à 4, **caractérisé en ce qu'**ensuite, la portion de matière fondue est remodelée par forgeage pour former un embout de toute forme désirée.

6. Procédé selon la revendication 5, **caractérisé en ce que** ledit embout (28) est constitué d'une tête.

7. Procédé selon la revendication 5, **caractérisé en ce que** ledit embout (30) a sensiblement le même diamètre que le câble et est ensuite percé d'un trou taraudé (32).

8. Procédé selon la revendication 5, **caractérisé en ce que** ledit embout (34) a sensiblement le même diamètre que le câble et est ensuite doté d'une partie filetée (36).

9. Pièce résultant du procédé selon l'une des revendications 1 à 8, **caractérisée en ce qu'**entre la portion totalement fondue (22) et la portion de câble n'ayant subi aucune fusion (24), elle comporte une portion de transition (26) dans laquelle la proportion de métal fondu décroît progressivement, l'effet étant plus marqué à la périphérie qu'au coeur du câble.
